# EUROPÄISCHE PATENTANMELDUNG

(11) **EP 1 364 837 A2**
(43) Veröffentlichungstag der Anmeldung: **26.11.2003**
(21) Anmeldenummer: 03006862.1
(22) Anmeldetag: 28.03.2003
(51) Int. Cl.: B60R 21/16, B60R 21/20

(54) **Gassack-Modul**

(30) Priorität: 21.05.2002 DE 20207860 U
(71) Anmelder: TRW Occupant Restraint Systems GmbH & Co. KG, 73553 Alfdorf (DE)
(72) Erfinder: Berbalk, Werner, 73553 Vordersteinenberg (DE)
(74) Vertreter: Strass, Jürgen

(57) **Zusammenfassung**

Ein Gassack-Modul umfaßt einen gefalteten Gassack (10), der von einem bereichsweise in mehrere Falten gelegten Mantel (12) umgeben ist. Die Falten sind durch eine Naht (22) miteinander verbunden, die durch den Dehnungsdruck des sich entfaltenden Gassacks (10) aufgerissen wird.

## Beschreibung

Die Erfindung betrifft ein Gassack-Modul mit einem gefalteten Gassack, der von einem bereichsweise in mehrere Falten gelegten Mantel umgeben ist.

Ein solches Gassack-Modul ist im Fahrzeug hinter einer aufklappbaren Abdeckung unter der Instrumententafel angeordnet. Bei Aktivierung des Gassacks darf von der sich von der Instrumententafel lösenden Abdeckung keine Gefährdung für die Insassen ausgehen. Aus der DE-U-297 11 679 ist ein Gassack-Modul der eingangs genannten Art bekannt, mit dem eine Reduzierung der Auftreffgeschwindigkeit der Abdeckung auf ein Hindernis erreicht werden kann. Der bei diesem Modul vorgesehene Mantel erlaubt die Entfaltung des Gassacks zunächst bis zu einem bestimmten Volumen in einer aus dem Modul heraus in den Innenraum des Fahrzeugs weisenden Hauptrichtung. Durch den Dehnungsdruck des entfaltenden Gassacks wird der Mantel gespannt, so daß sich der Gassack anschließend seitlich zur Hauptrichtung ausdehnt, bis der Mantel schließlich an einer Aufreißlinie aufreißt und dann erst die weitere Ausdehnung des Gassacks in der Hauptrichtung freigibt.

Die Erfindung schafft ein Gassack-Modul, mit dem die Entfaltung des Gassacks noch besser gesteuert und somit das Öffnungsverhalten der Abdeckung noch besser kontrolliert werden kann. Gemäß der Erfindung sind die Falten durch eine Naht miteinander verbunden, die durch den Dehnungsdruck des sich entfaltenden Gassacks aufgerissen wird. Durch entsprechende Ausgestaltung der Reißnaht kann das Ausdehnungsverhalten zu Beginn der Entfaltungsphase gezielt beeinflußt werden, so daß ein zu hartes Auftreffen der aufgerissenen Abdeckung z.B. auf die Frontscheibe vermieden werden kann. Außerdem dient der Mantel als Schutzhülle für den Gassack zum Schutz vor äußeren Umwelteinflüssen.

Gemäß einer bevorzugten Ausführungsform weist der Mantel zusätzlich eine Aufreißlinie auf, entlang der der Mantel durch den Dehnungsdruck des sich entfaltenden Gassacks aufgerissen wird. Die Aufreißlinie ist in diesem Fall vorzugsweise so ausgebildet, daß der Mantel erst nach dem Aufreißen der die Falten verbindenden Naht entlang der Aufreißlinie aufgerissen wird. Somit ist gewährleistet, daß sich der Gassack erst in der Hauptrichtung, dann zu den Seiten und erst nach dem Aufreißen des Mantels wieder in der Hauptrichtung entfaltet.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine schematische seitliche Schnittansicht eines von einem Mantel umgebenen Gassacks;
- Figur 2 eine Draufsicht auf einen Mantel im flach ausgebreiteten Zustand;
- Figur 3 eine perspektivische Ansicht eines Modulgehäuses mit Gasgenerator; und
- Figur 4 eine perspektivische Seitenansicht eines Gassack-Moduls.

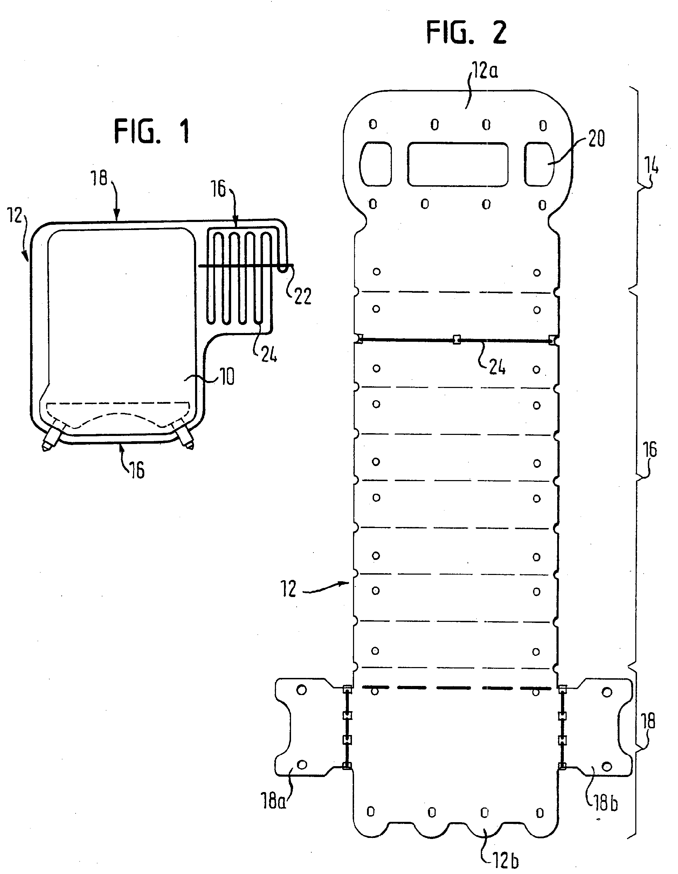

Der in Figur 1 dargestellte Gassack 10 befindet sich im zusammengefalteten Zustand und ist von einem Mantel 12 umgeben. Der in Figur 2 im flach ausgebreiteten Zustand gezeigte Mantel 12 ist bandförmig und hat zwei Enden 12a, 12b, mit denen er im Gassackmodul befestigt wird, wie später noch erläutert wird. Der Mantel 12 weist einen ersten Abschnitt 14 auf, in dem mehrere Öffnungen 20 vorgesehen sind. Der Mantel 12 ist so um den Gassack 10 gelegt, daß die Öffnungen 20 der Einblasöffnung des Gassacks 10 gegenüberliegen. Ein zweiter Abschnitt 16 des Mantels 12 ist zick-zack-artig gefaltet und liegt flach auf dem gefalteten Gassack 10 auf. Die Falten des zweiten Abschnitts sind durch eine Naht 22 miteinander verbunden. Eine der Faltkanten ist als Aufreißlinie 24 ausgebildet, die sich über die gesamte Breite des Mantels 12 erstreckt. Ein dritter Abschnitt 18 des Mantels 12 weist zwei seitlich angeordnete Lappen 18a, 18b auf, die die Stirnseiten des gefalteten Gassacks 10 umschließen.

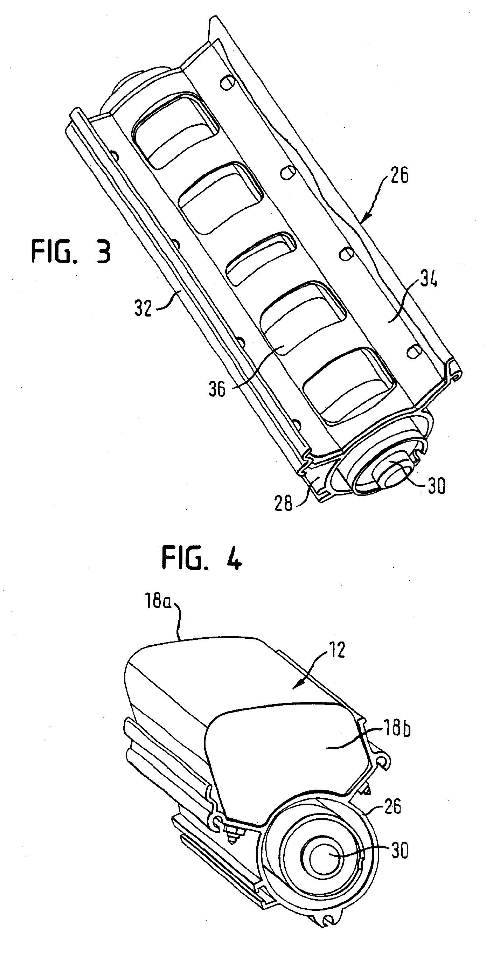

Figur 3 zeigt ein Modulgehäuse 26 mit einer ersten Aufnahme 28, in die ein Gasgenerator 30 eingesetzt ist. Eine zweite Aufnahme 32 ist für das aus Gassack 10 und Mantel 12 bestehende Gassackpaket vorgesehen. Die zweite Aufnahme 32 umfaßt eine Halteplatte 34, an der die beiden Enden 12a, 12b des Mantels 12 festgelegt werden. Das Gehäuse weist ferner Öffnungen 36 auf, durch die das aus den Auströmöffnungen des Gasgenerators 30 austretende Gas in den Gassack 12 eintreten kann.

Figur 4 zeigt ein Gassack-Modul mit Gehäuse 26, Gasgenerator 30 und Gassackpaket. Das Gassackpaket ist so in der zweiten Aufnahme 32 angeordnet, daß der erste Abschnitt 14 des Mantels 12 mit den Öffnungen 20 den Öffnungen 36 des Gehäuses 26 gegenüberliegt und der zweite Abschnitt 16 des Mantels 12 mit den Falten im eingebauten Zustand des Moduls unter der Instrumententafel der Abdeckung gegenüberliegt.

Bei Aktivierung des Gassacks 10 wird dieser durch den Gasgenerator 30 aufgeblasen. Die Reißnaht 22, mittels derer die Falten des Gassacks 10 miteinander verbunden sind, ist so ausgestaltet, daß sie bei einem bestimmten Innendruck des Gassacks 10 zu Beginn des Entfaltungsvorgangs aufreißt, wodurch der Mantel 12 jedoch nicht zerstört wird. Vielmehr gestattet die Freigabe der Falten eine Ausdehnung des Gassacks 10 in einer aus dem Modul in den Innenraum des Fahrzeugs weisenden Hauptrichtung bis der Gassack 10 ein Volumen erreicht hat, bei dem der umgebende Mantel 12 gespannt ist und der weiteren Ausdehnung in diese Richtung einen stärkeren Widerstand entgegensetzt. In dieser Phase, also nach dem Aufreißen der Naht 22, wird die Abdeckung, hinter der das Gassack-Modul angeordnet ist, durch den sich entfaltenden Gassack 10 geöffnet. In der daran anschließenden Phase dehnt sich der Gassack 10 zu den Seiten aus, bevor durch den weiter ansteigenden Dehnungsdruck der Mantel 12 entlang der Aufreißlinie 24 aufreißt und der Gassack 10 sich wieder in der Hauptrichtung ausbreiten kann. Zu diesem Zeitpunkt ist die Abdeckung jedoch schon so weit geöffnet, so daß sie keine wesentliche Beschleunigung mehr durch den sich weiter ausdehnenden Gassack 10 erfährt.

## Patentansprüche

1. Gassack-Modul mit einem gefalteteten Gassack (10), der von einem bereichsweise in mehrere Falten gelegten Mantel (12) umgeben ist, **dadurch gekennzeichnet, daß** die Falten durch eine Naht (22) miteinander verbunden sind, die durch den Dehnungsdruck des sich entfaltenden Gassacks (10) aufgerissen wird.

2. Gassack-Modul nach Anspruch 1, **dadurch gekennzeichnet, daß** der Mantel (12) zusätzlich eine Aufreißlinie (24) aufweist, entlang der der Mantel (12) durch den Dehnungsdruck des sich entfaltenden Gassacks (10) aufgerissen wird.

3. Gassack-Modul nach Anspruch 2, **dadurch gekennzeichnet, daß** die Aufreißlinie (24) so ausgebildet ist, daß der Mantel (12) nach dem Aufreißen der Naht (22) entlang der Aufreißlinie (24) aufgerissen wird.

4. Gassack-Modul nach einem der vorhergehenden Ansprüche, **gekennzeichnet durch** eine Abdeckung, die eine Austrittsöffnung für den Gassack (10) verschließt und die von dem sich entfaltenden Gassack (10) geöffnet werden kann.

5. Gassack-Modul nach Anspruch 4, **dadurch gekennzeichnet, daß** der Mantel (12) so ausgebildet ist, daß die Abdeckung nach dem Aufreißen der Naht (22) geöffnet wird.

6. Gassack-Modul nach einem der vorhergehenden Ansprüche, **dadurch gekennzeichnet, daß** der Mantel (12) im flach ausgebreiteten Zustand ein Band bildet, dessen Enden (12a, 12b) an einer Halteplatte (34) für den Gassack (10) festgelegt sind.

7. Gassack-Modul nach Anspruch 6, **dadurch gekennzeichnet, daß** der den gefalteten Gassack (10) umgebende Mantel (12) auch die Seiten des Gassacks (10) abdeckt.
